# EUROPÄISCHE PATENTANMELDUNG

(11) **EP 1 520 680 A1**
(43) Veröffentlichungstag der Anmeldung: **06.04.2005**
(21) Anmeldenummer: 04023126.8
(22) Anmeldetag: 29.09.2004
(51) Int. Cl.: B29C 45/64

(54) **Spritzgiessmaschine mit lediglich einer Formaufspannplatte**

(30) Priorität: 02.10.2003 DE 10346043
(71) Anmelder: Windsor Kunststofftechnologie GmbH, 63452 Hanau (DE)
(72) Erfinder: Kranitz, Josef, 63674 Altenstadt (DE); Scherer, Robert, 63486 Bruchköbel (DE)
(74) Vertreter: Röther, Peter, Dipl.-Phys.

(57) **Zusammenfassung**

Die Erfindung betrifft eine Spritzgießmaschine mit einem auf dem Maschinenbett (2) verschiebbar angeordneten Plastifizier- und Einspritzaggregat (3) und einer Schließeinheit (13) zum Aufbringen der Zuhaltekraft für ein an einer Formaufspannplatte (10) befestigtes Formwerkzeug (12), die dadurch gekennzeichnet ist, dass lediglich eine Formaufspannplatte (10) vorgesehen ist, die ortsfest auf einem Rahmengestell (8) montiert ist und an der Formaufspannplatte (10) das komplette Formwerkzeug (12) mit integrierter Schließeinheit (13) angeordnet ist.

## Beschreibung

Die Erfindung betrifft eine Spritzgießmaschine mit einem auf dem Maschinenbett verschiebbar angeordneten Plastifizier- und Einspritzaggregat und einer Schließeinheit zum Aufbringen der Zuhaltekraft für ein an einer Formaufspannplatte befestigtes Formwerkzeug gemäß dem Oberbegriff des Patentanspruches 1.

In der Regel sind derartige Spritzgießmaschinen so aufgebaut, dass jeweils eine Formhälfte des Formwerkzeugs an der ihr zugeordneten Formaufspannplatte befestigt ist. Eine dieser Formaufspannplatten ist dabei fest installiert, während die zweite Formaufspannplatte verfahrbar relativ zur ersten ausgebildet ist. Durch die Verfahrbarkeit der zweiten Formaufspannplatte, die in der Regel auf vier durch die Ecken der Formauspannplatte hindurchgehenden Holmen geführt ist, wird zum einen das Formwerkzeug für den Spritzvorgang geschlossen und zum anderen wird durch einen Antrieb die für den Spritzvorgang erforderliche Zuhaltekraft im Werkzeug aufgebracht.

Hierfür sind die verschiedensten Lösungen bekannt. So wird die Schließbewegung und/oder die Zuhaltekraft durch einen groß dimensionierten Hydraulikzylinder aufgebracht oder aber durch einen Kniehebelantrieb.

Auf jeden Fall ist der Aufwand für die Verschiebebewegung der zweiten Formaufspannplatte in der Regel immer sehr groß, auch wenn das zu spritzende Teil einen derartigen Aufwand nicht immer benötigt.

Darüberhinaus ist auf der der Schließseite gegenüberliegenden Seite der Formaufspannplatten das Plastifizier- und Spritzaggregat angeordnet, welches ebenfalls einen Antrieb benötigt, um für den Einspritzvorgang an den Angußkanal des Formwerkzeugs herangefahren zu werden und die Düse dieses Einspritzaggregats mit großer Kraft an den Einspritzpunkt des Formwerkzeugs anzulegen.

Die eben beschriebenen Spritzgießmaschinen haben neben den schon geschilderten Nachteilen den weiteren Nachteil, dass durch die Führungsholme der Werkzeugeinbauraum nicht frei zugänglich ist. Zum Werkzeugwechsel müssen eventuell die Holme gezogen werden, so dass das Werkzeug aus- und das neue Werkzeug eingebaut werden kann, wonach dann die Holme wieder in ihre ursprüngliche Stellung gebracht werden.

Auch die Zugänglichkeit zum Entnehmen der fertig gespritzten Teile oder das Einlegen von zu umspritzenden Einlegeteilen ist durch die Holmgeometrie erschwert.

Ein weiterer Nachteil ist darin zu sehen, dass die Größe des Formwerkzeugs und damit des herzustellenden Spritzgußteils durch die Holme begrenzt ist.

Der vorliegenden Erfindung liegt daher die Aufgabe zugrunde, eine Spritzgießmaschine der eingangs genannten Art so auszugestalten, dass die zu bewegende Masse verringert wird, die Zugänglichkeit zum Werkzeug bzw. Werkzeugeinbauraum verbessert wird und die Flexibilität bei der Werkzeuggröße erhöht wird.

Die Erfindung löst diese Aufgabe gemäß dem kennzeichnenden Teil des Anspruchs 1 dadurch, dass lediglich eine Formaufspannplatte vorgesehen ist, die ortsfest auf einem Rahmengestell montiert ist und an der Formaufspannplatte das komplette Formwerkzeug mit integrierter Schließeinheit angeordnet ist.

Dadurch, dass auf eine zweite, verschiebbare Formaufspannplatte verzichtet wird, und nur noch eine feststehende Formaufspannplatte benötigt wird, entfallen die zur Führung einer derartigen Formaufspannplatte notwendigen Holme, der Antrieb für eine verschiebliche Formauspannplatte, so dass der Antrieb für die Schließbewegung des Formwerkzeugs und das Aufbringen der Zuhaltekraft entsprechend geringer dimensioniert werden kann und, da das Formwerkzeug seine eigene integrierte Schließeinheit aufweist, exakt an die Gegebenheiten angepasst werden kann.

Es ist nun möglich, auf der Formaufspannplatte Werkzeuge verschiedenster Abmessungen zu befestigen, auch solche, die in ihren Abmessungen über die Formaufspannplatte hinausreichen.

Der Aus- und Einbau des entsprechenden Werkzeugs gestaltet sich dabei einfach. Darüberhinaus bietet die erfindungsgemäße Lösung den Vorteil der freien Zugänglichkeit zum Formwerkzeug, sowohl von der Seite, von oben als auch von unten.

Das Einlegen und Entnehmen von Teilen in und aus dem Werkzeug wird vereinfacht, da keine Störkonturen durch Holme oder eine bewegliche Platte entstehen.

Das Werkzeug mit integrierter Schließeinheit kann in vielfältiger Weise an der Formaufspannplatte angeordnet bzw. ausgeführt sein.

Es kann sich dabei beispielsweise um hydraulische Schließzylinder handeln, die die Formaufspannplatte durchdringen sowie die daran befestigte Formhälfte und an der zweiten Formhälfte angreifen. Der Einbauort dieser Schließzylinder ist dabei in nicht zu engen Grenzen frei wählbar, so dass gewährleistet ist, dass das Entnehmen von gespritzten Formlingen sowie das Einlegen von Einlegeteilen zum Umspritzen derselben störungsfrei erfolgen kann.

Gemäß Anspruch 4 ist vorgesehen, dass das Formwerkzeug zusätzlich mit Verriegelungselementen in Schließstellung fixierbar ist. Diese Verriegelungselemente unterstützen die Schließeinheit bzw. entlasten diese.

Das in Maschinenlängsachsenrichtung verschiebbare Plastifizierund Einspritzaggregat ist auf dem Maschinenbett angeordnet, während die Schließeinheit (Formaufspannplatte plus Werkzeug) auf einem Rahmengestell angeordnet sind.

Rahmengestell und Maschinenbett sind abstandsunveränderlich zueinander, indem sie entweder miteinander fest verbunden sind (verschweißt, verschraubt, etc.) oder aber jeweils für sich im Boden fest verankert sind.

Gemäß Anspruch 7 ist vorgesehen, dass das Plastifizier- und Einspritzaggregat auch in der Höhe verstellbar und seitlich verschiebbar oder verschwenkbar ist. Hierdurch ergibt sich eine flexible Gestaltung des Anspritzpunktes des Spritzgießwerkzeugs, da der Anspritzpunkt nicht unbedingt in Maschinenlängsachsenrichtung liegen muss.

Für große Formwerkzeuge, die ein entsprechend hohes Gewicht mit sich bringen, ist gemäß Anspruch 8 vorgesehen, dass das Formwerkzeug auf auf dem Rahmengestell vorgesehenen Führungen unterstützt und geführt ist.

Es kann sich hierbei um Gleit- oder Rollenführungen handeln.

Das Plastifizier- und Einspritzaggregat ist mittels geeigneter Antriebe mit der Formaufspannplatte verbunden, wodurch das Einspritzaggregat in die Einspritzstellung bewegt wird und die erforderliche Düsenanlagekraft aufgebracht wird.

Die Antriebe hierfür können Hydraulikzylinder sein, es können jedoch auch elektrisch angetriebene Spindeln o.dgl.. eingesetzt werden.

Grundsätzlich ist zu sagen, dass alle Antriebe sowohl auf der Schließseite als auch auf der Einspritzseite elektrischer Art sein können.

Gemäß Anspruch 13 ist vorgesehen, dass die Energieversorgung und Überwachung aller Werkzeugfunktionen von der Maschinensteuerung übernommen wird.

Die Maschinensteuerung befindet sich vorzugsweise in einem Schaltschrank und verfügt über ein freistehendes, alternativ auch fest montiertes Bedienterminal.

Zusätzliche Funktionen wie Beladen und Entladen des Werkzeugs mittels Robotern, sowie eventuell erforderlicher Signalaustausch mit anderen Spritzgießmaschinen werden mittels einer dafür geschaffenen elektrischen Schnittstelle übernommen (Anspruch 14).

Alle Werkzeugbewegungen können optional auch unabhängig von der Energieversorgung der Spritzseite durch separate Hydraulikkreisläufe der im Maschinenbett unterhalb des Plastifizier- und Einspritzaggregats angeordneten Krafteinheit durchgeführt werden (Anspruch 15).

Das mit der eigenen Schließeinheit versehene Formwerkzeug kann gemäß Anspruch 10 mit einem Heißkanalverteiler versehen sein.

Darüberhinaus können im Formwerkzeug hydraulisch oder pneumatisch angetriebene Nadelverschlußdüsen vorgesehen sein, sowie gemäß Anspruch 12 hydraulisch betriebene Kernzüge.

Somit bildet das Formwerkzeug eine mehr oder weniger autarke Einheit. Hierdurch wird der Formwechsel erheblich erleichtert.

Die Einsatzgebiete für die "Ein-Platten-Spritzgießmaschine" sind vielfältig.

So können Ein-Komponententeile mit großen Abmessungen und relativ geringen Zuhaltekräften hergestellt werden. Sie eignet sich für Werkzeuge mit im Vergleich zu den Aussenabmessungen relativ geringen Schließkräften. Weitere Einsatzgebiete sind das An- oder Umspritzen von Einlegeteilen aus Metall oder Kunststoff (Zwei-Komponenten-Technik).

Die Erfindung wird im folgenden anhand einer Zeichnung dargestellt und näher erläutert.

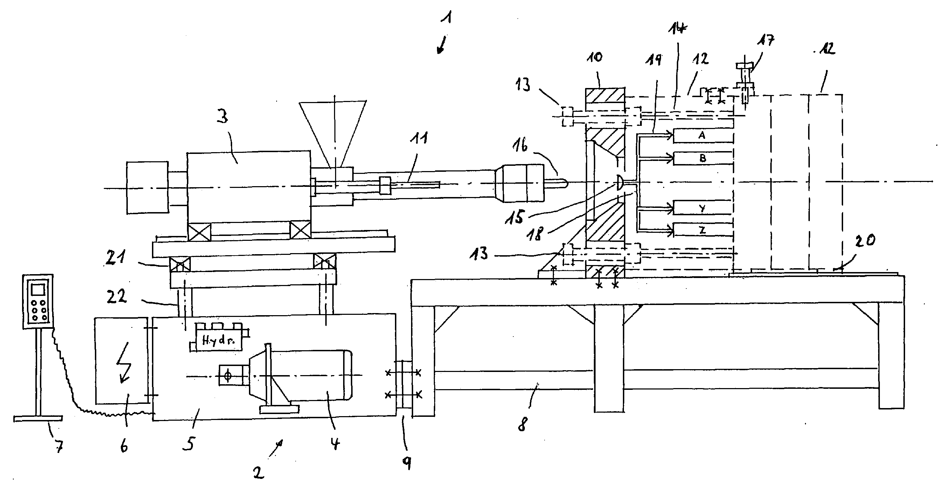

In der einzigen Figur ist eine Spritzgießmaschine dargestellt und allgemein mit dem Bezugszeichen 1 versehen. Auf einem Maschinenbett 2 ist in Maschinenlängsrichtung verschiebbar ein an sich bekanntes Plastifizier- und Einspritzaggregat 3 angeordnet. Das Aggregat 3 ist wie bei 21 und 22 angedeutet auch in der Höhe und seitlich verstellbar. Im Maschinenbett 2 befindet sich eine hydraulische Krafteinheit 4, ein im Maschinenbett integrierter Öltank 5, ein E-Schaltschrank mit Maschinensteuerung 6. Ein in diesem Fall freistehendes Bedienterminal 7 ist mit der Steuerung verbunden.

Abstandsunveränderlich ist mit dem Maschinenbett 2 ein Rahmengestell 8 bei 9 verbunden, auf dem sich fest installiert, also ortsfest, eine Formaufspannplatte 10 befindet.

Mit der Formaufspannplatte 10 fest verbunden sind Hydraulikzylinder 11, die seitlich am Plastifizier- und Einspritzaggregat 3 angeordnet sind und dafür sorgen, dass das Aggregat für den Spritzvorgang an die Formaufspannplatte 10 herangezogen werden kann.

An der Formaufspannplatte 10 auf der dem Spritzaggregat 3 abgewandten Seite ist ein Formwerkzeug 12 befestigt, wobei in der Zeichnung durch die gestrichelte Linienführung angedeutet ist, mit welchem Hub das Werkzeug auf und zu gefahren wird. Für den Schließvorgang bzw. das Öffnen des Formwerkzeugs 12 sind im vorliegenden Ausführungsbeispiel Druckmittelzylinder 13 vorgesehen, die mit ihren Zylindern an der stationären Werkzeughälfte befestigt sind, die an der Formaufspannplatte 10 befestigt ist, und diese Werkzeughälfte durchdringen. Die Kolbenstangen 14 der Druckmittelzylinder 13 sind an der anderen beweglichen Formhälfte angeschlagen.

Mit dem Bezugszeichen 15 ist der Anspritzpunkt des Formwerkzeugs 12 bezeichnet, an den die Düsenspitze 16 des Einspritzaggregats 3 angelegt wird.

Zur Unterstützung der Druckmittelzylinder 13 sind am Formwerkzeug 12 Verriegelungszylinder 17 angeordnet, die in Schließstellung des Formwerkzeugs 12 die Verriegelung bewirken.

Da in den dargestellten Formwerkzeugen 12 gleichzeitig eine große Zahl von Spritzlingen geformt werden soll, sind hier die Formkavitäten mit den Buchstaben A, B,...Y, Z bezeichnet.

Ein (möglicher) Heißkanalverteiler 18 verteilt vom Anspritzpunkt 15 das von der Plastifizier- und Einspritzeinheit 3 gelieferte plastifizierte Material über Nadelverschlußdüsen 19 in die jeweiligen Formkavitäten A, B, ...Y, Z.

Angedeutet ist mit dem Bezugszeichen 20 eine auf dem Rahmengestell 8 vorgesehene Führung für das Formwerkzeug 12, die gerade bei schweren Formwerkzeugen für die Unterstützung und Führung sorgt.

## Patentansprüche

1. Spritzgießmaschine mit einem auf dem Maschinenbett verschiebbar angeordneten Plastifizier- und Einspritzaggregat und einer Schließeinheit zum Aufbringen der Zuhaltekraft für ein an einer Formaufspannplatte befestigtes Formwerkzeug, **dadurch gekennzeichnet, dass** lediglich eine Formaufspannplatte (10) vorgesehen ist, die ortsfest auf einem Rahmengestell (8) montiert ist und an der Formaufspannplatte (10) das komplette Formwerkzeug (12) mit integrierter Schließeinheit (13) angeordnet ist.

2. Spritzgießmaschine nach Anspruch 1, **dadurch gekennzeichnet, dass** Rahmengestell (8) und Maschinenbett (2) fest miteinander und abstandsunveränderlich verbunden sind.

3. Spritzgießmaschine nach Anspruch 1, **dadurch gekennzeichnet, dass** Rahmengestell (8) und Maschinenbett (2) fest im Boden verankert sind.

4. Spritzgießmaschine nach einem der Ansprüche 1 bis 3, **dadurch gekennzeichnet, dass** das Formwerkzeug (12) zusätzlich mit Verriegelungselementen (17) in Schließstellung fixierbar ist.

5. Spritzgießmaschine nach einem der Ansprüche 1 bis 4, **dadurch gekennzeichnet, dass** das Einspritzaggregat (3) mittels an der Formaufspannplatte (10) angreifenden Antrieben (11) verfahrbar ist.

6. Spritzgießmaschine nach Anspruch 5, **dadurch gekennzeichnet, dass** die Antriebe (11) Hydraulikzylinder sind.

7. Spritzgießmaschine nach einem der Ansprüche 1 bis 6, **dadurch gekennzeichnet, dass** das Plastifizier- und Einspritzaggregat (3) in der Höhe verstellbar und seitlich verschwenkbar ist.

8. Spritzgießmaschine nach einem der Ansprüche 1 bis 7, **dadurch gekennzeichnet, dass** das Formwerkzeug (12) auf auf dem Rahmengestell (8) vorgesehenen Führungen (20) unterstützt und geführt ist.

9. Spritzgießmaschine nach einem oder mehreren der Ansprüche 1 bis 8, **dadurch gekennzeichnet, dass** zum Antrieb des Plastifizier- und Einspritzaggregats (3) und der Schließeinheit (10,13) elektrische Antriebe vorgesehen sind.

10. Spritzgießmaschine nach einem der Ansprüche 1 bis 9, **dadurch gekennzeichnet, dass** im Formwerkzeug (12) ein Heißkanalverteiler (18) angeordnet ist.

11. Spritzgießmaschine nach einem der Ansprüche 1 bis 10, **dadurch gekennzeichnet, dass** im Formwerkzeug (12) hydraulisch oder pneumatisch angetriebene Nadelverschlussdüsen (19) vorgesehen sind.

12. Spritzgießmaschine nach einem der Ansprüche 1 bis 11, **dadurch gekennzeichnet, dass** im Formwerkzeug (12) hydraulisch betriebene Kernzüge vorgesehen sind.

13. Spritzgießmaschine nach einem der Ansprüche 1 bis 112, **dadurch gekennzeichnet, dass** die Energieversorgung und Überwachung aller Werkzeugfunktionen von der Maschinensteuerung (6) übernommen wird.

14. Spritzgießmaschine nach einem der Ansprüche 1 bis 13, **dadurch gekennzeichnet, dass** eine elektrische Schnittstelle zur Verbindung mit anderen Maschinen vorgesehen ist.

15. Spritzgießmaschine nach einem der Ansprüche 1 bis 14, **dadurch gekennzeichnet, dass** die Spritzseite (3) und die Werkzeugseite (10,12)jeweils unabhängig voneinander arbeitende Energieversorgungen (4) aufweisen.
